# EUROPEAN PATENT APPLICATION

(11) **EP 4 564 827 A1**
(43) Date of publication of application: **04.06.2025**
(21) Application number: 23846268.3
(22) Date of filing: 14.07.2023
(51) Int. Cl.: H04N 21/431, G09G 5/00, G09G 5/02, G09G 5/10, H04N 21/442

(54) **INFORMATION PROCESSING DEVICE, INFORMATION PROCESSING METHOD, AND INFORMATION PROCESSING SYSTEM**

(30) Priority: 29.07.2022 JP 2022121961
(71) Applicant: Sony Group Corporation, Tokyo 108-0075 (JP)
(72) Inventor: MIURA, Koji, Tokyo 108-0075 (JP); TAKAMATSU, Takashi, Tokyo 108-0075 (JP); KANEDA, Kazumasa, Tokyo 108-0075 (JP); KUBOTA, Hiroyuki, Tokyo 108-0075 (JP); KAGOYA, Tsuyoshi, Tokyo 108-0075 (JP); IMAMURA, Hiroshi, Tokyo 108-0075 (JP); MIYAKAWA, Kenta, Tokyo 108-0075 (JP)
(74) Representative: Witte, Weller & Partner Patentanwälte mbB
(86) International application number: PCT/JP2023/025995
(87) International publication number: WO 2024/024537

(57) **Abstract**

The present technology relates to an information processing apparatus, an information processing method, and an information processing system for providing a safe viewing space in the interior of a vehicle while taking safety in the outside of the vehicle into consideration. A condition determination section determines the condition of the outside of a subject vehicle according to outside-vehicle information regarding the outside of the subject vehicle. A risk degree determination section determines a degree of misrecognition risk of a video being displayed on a display section disposed in an interior of the subject vehicle from the outside of the subject vehicle according to the determined condition of the outside of the subject vehicle and brightness information regarding the video. A display control section imposes a display restriction on the video according to the degree of misrecognition risk. The present technology is applicable to, for example, a system that provides a video content viewing space to an occupant in a vehicle.

## Description

### [Technical Field]

The present technology relates to an information processing apparatus, an information processing method, and an information processing system, and more particularly, to an information processing apparatus, an information processing method, and an information processing system for providing a safe viewing space in an interior of a vehicle while taking safety in an outside of the vehicle into consideration.

### [Background Art]

In recent years, a driver and an occupant can collect various kinds of information and view a variety of videos by means of an on-vehicle display device which is installed in an automobile.

For example, PTL 1 discloses a technology of detecting a visual line direction of a driver, and controlling brightness of an on-vehicle display device when a state where the driver is not gazing at the on-vehicle display device changes to a state where the driver is gazing at the on-vehicle display device.

### [Citation List]

### [Patent Literature]

[PTL 1]
Japanese Patent Laid-Open No. 2012-162126

### [Summary]

### [Technical Problem]

Meanwhile, in a case where a video being displayed on an on-vehicle display device is viewable from the outside of a vehicle, there is a possibility that a driver of a peripheral vehicle traveling in the rear of or alongside a subject vehicle mistakenly recognizes the video as a lamp device.

The present technology has been made in view of the above circumstances, and can provide a safe viewing space in the interior of a vehicle while taking safety in the outside of the vehicle into consideration.

### [Solution to Problem]

An information processing apparatus according to the present technology includes a condition determination section that determines a condition of an outside of a subject vehicle according to outside-vehicle information regarding the outside of the subject vehicle, a risk degree determination section that determines a degree of misrecognition risk of a video being displayed on a display section disposed in an interior of the subject vehicle from the outside of the subject vehicle according to the determined condition of the outside of the subject vehicle and brightness information regarding the video, and a display control section that imposes a display restriction on the video according to the degree of misrecognition risk.

An information processing method according to the present technology includes, by an information processing apparatus, determining a condition of an outside of a subject vehicle according to outside-vehicle information regarding the outside of the subject vehicle, determining a degree of misrecognition risk of a video being displayed on a display section disposed in an interior of the subject vehicle from the outside of the subject vehicle according to the determined condition of the outside of the subject vehicle and brightness information regarding the video, and imposing a display restriction on the video according to the degree of misrecognition risk.

An information processing system according to the present technology includes a display section that is disposed in an interior of a subject vehicle, a condition determination section that determines a condition of an outside of the subject vehicle according to outside-vehicle information regarding the outside of the subject vehicle, a risk degree determination section that determines a degree of misrecognition risk of a video being displayed on the display section from the outside of the subject vehicle according to the determined condition of the outside of the subject vehicle and brightness information regarding the video, and a display control section that imposes a display restriction on the video according to the degree of misrecognition risk.

According to the present technology, the condition of the outside of a subject vehicle is determined according to outside-vehicle information regarding the outside of the subject vehicle, the degree of misrecognition risk of the video from the outside of the subject vehicle is determined according to the determined outside-vehicle condition and brightness information regarding a video being displayed on a display section that is disposed in the interior of the subject vehicle, and further, a display restriction is imposed on the video according to the degree of misrecognition risk.

### [Brief Description of Drawings]

[FIG. 1]

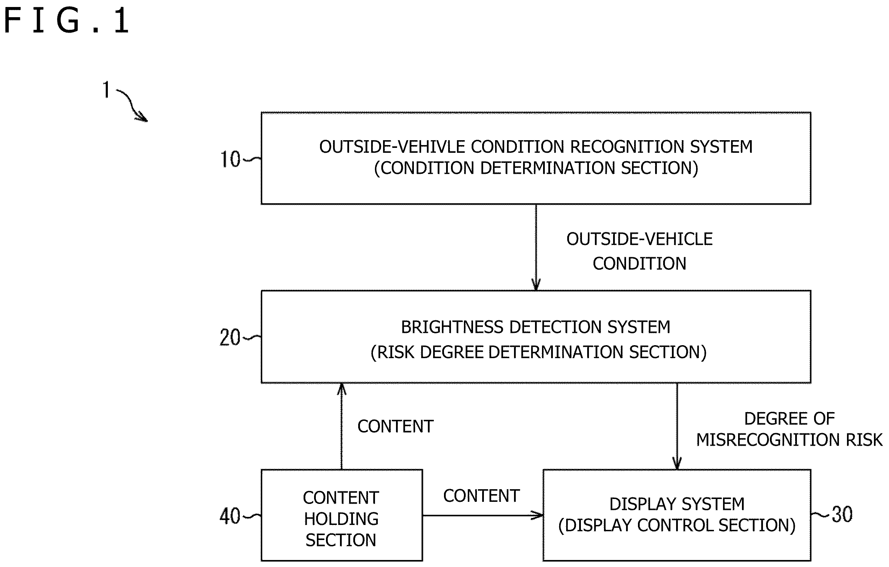

   FIG. 1 is a block diagram depicting a configuration example of an information display/determination system according to the present technology.
[FIG. 2]

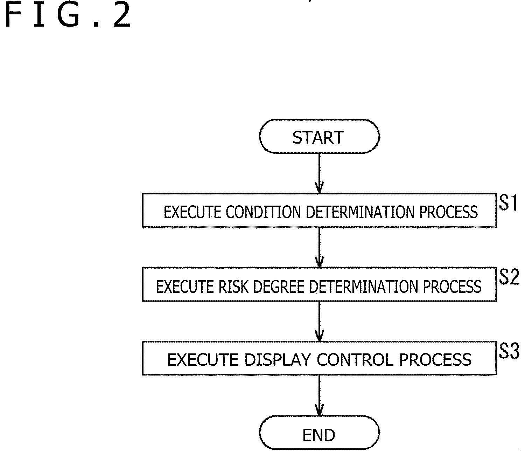

   FIG. 2 is a flowchart indicating operations of the information display/determination system.
[FIG. 3]

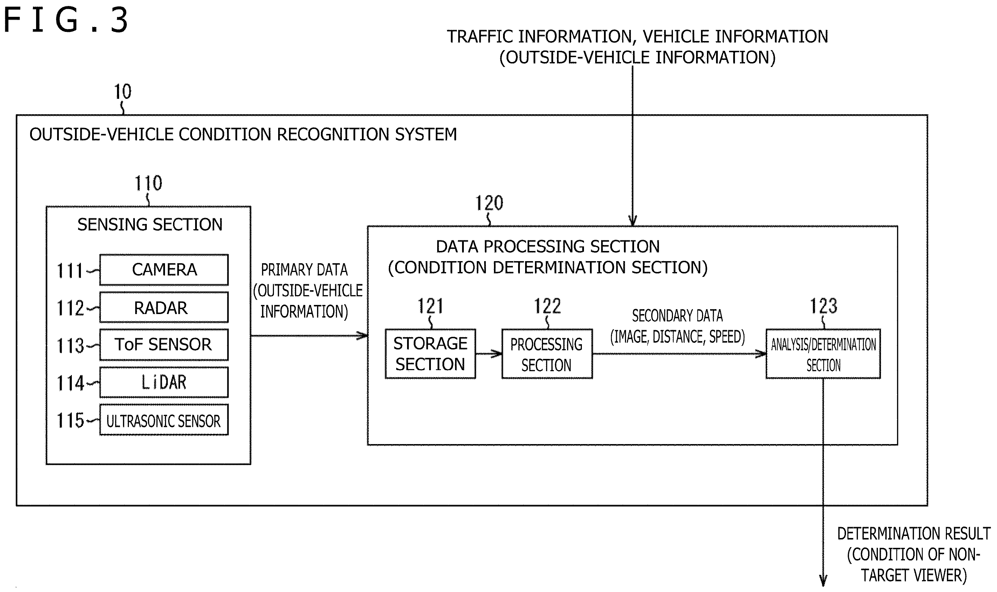

   FIG. 3 is a block diagram depicting a configuration example of an outside-vehicle condition recognition system.
[FIG. 4]

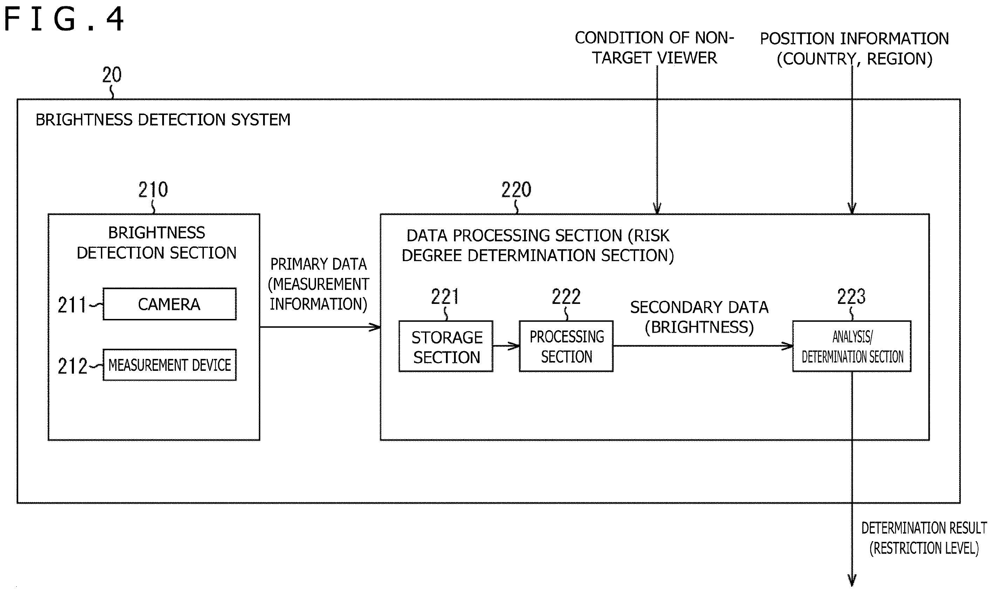

   FIG. 4 is a block diagram depicting a configuration example of a brightness detection system.
[FIG. 5]

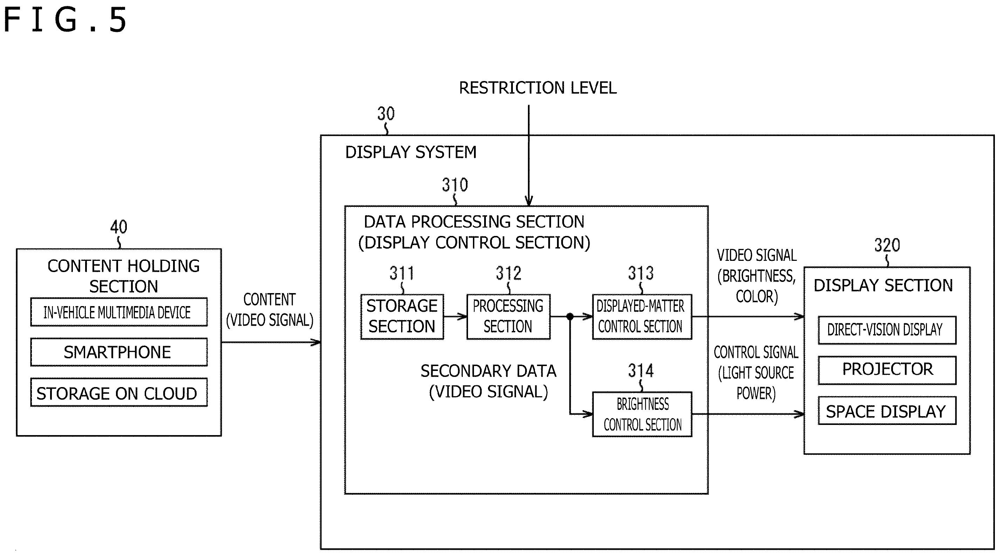

   FIG. 5 is a block diagram depicting a configuration example of a display system.
[FIG. 6]

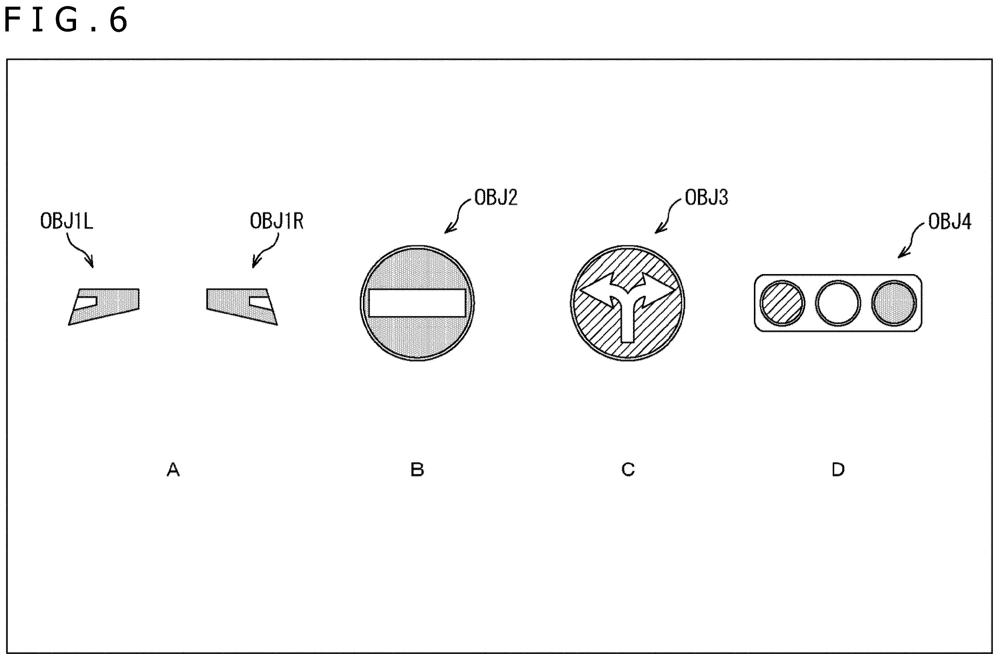

   FIG. 6 is a diagram depicting examples of objects that are likely to be misrecognized.
[FIG. 7]

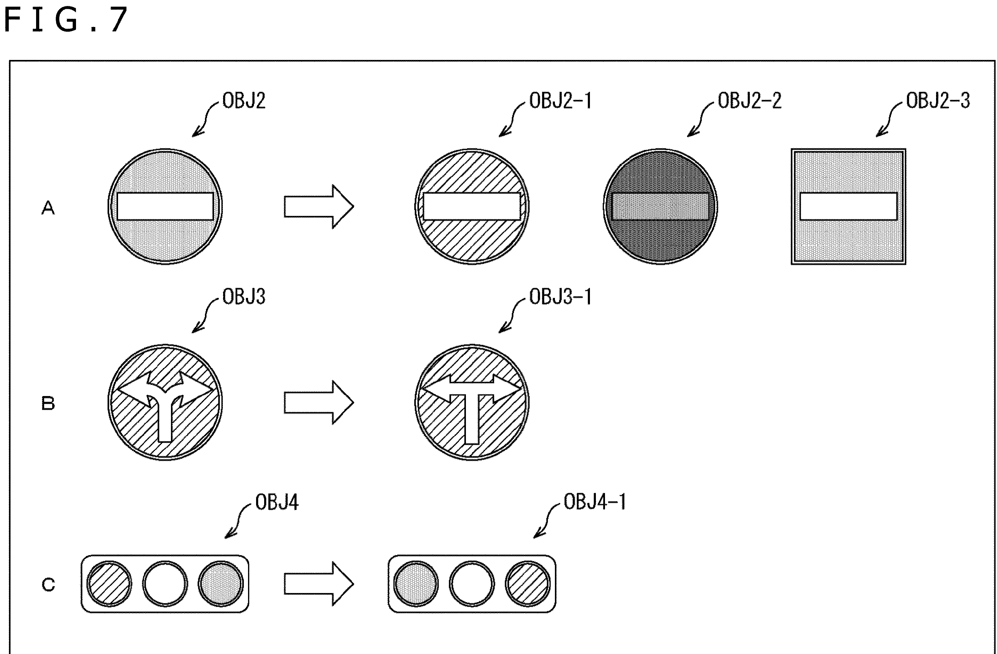

   FIG. 7 is a diagram indicating examples of changing displayed matters.
[FIG. 8]

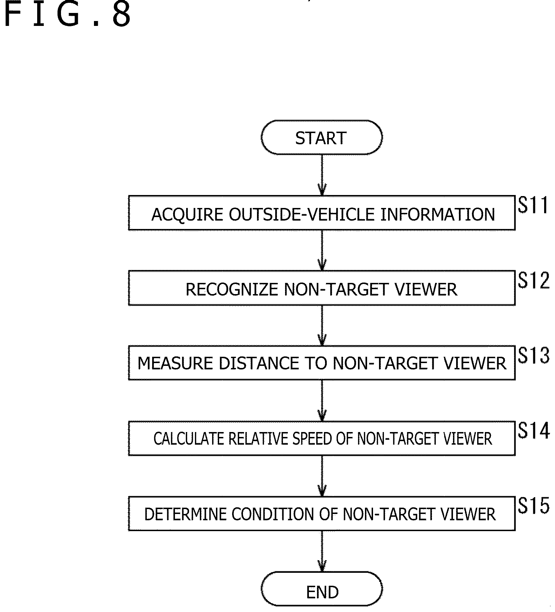

   FIG. 8 is a flowchart indicating operations of the outside-vehicle condition recognition system.
[FIG. 9]

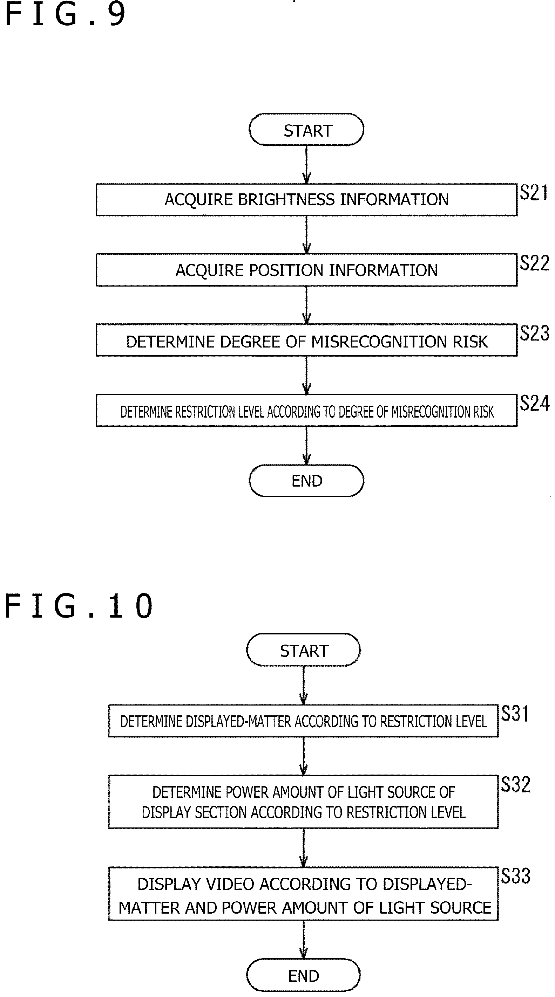

   FIG. 9 is a flowchart indicating operations of the brightness detection system.
[FIG. 10]
   FIG. 10 is a flowchart indicating operations of the display system.
[FIG. 11]

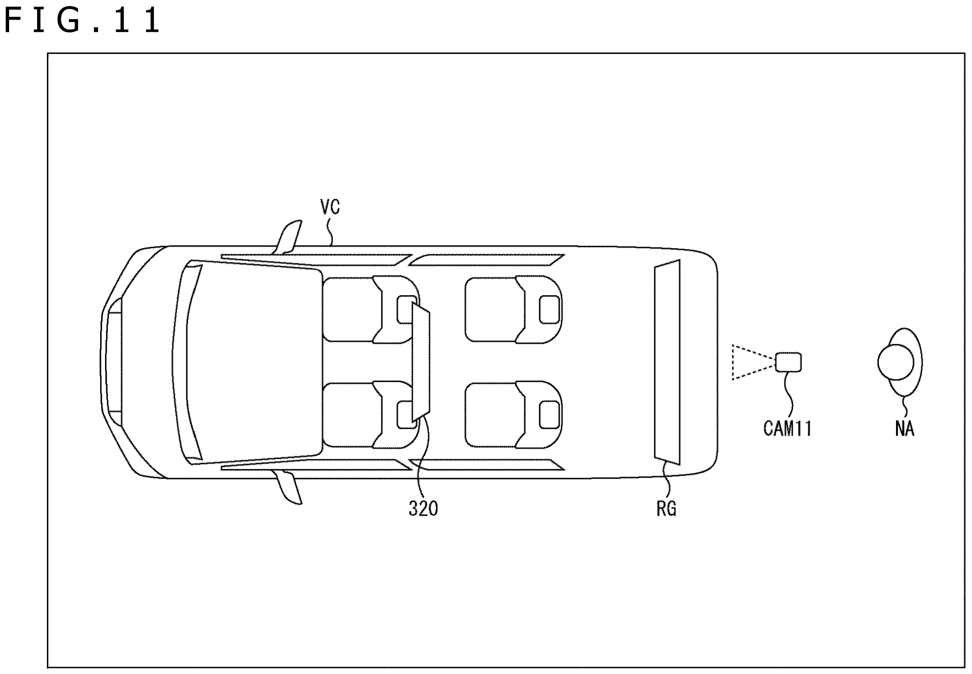

   FIG. 11 is a diagram depicting a first positioning example of the brightness detection section.
[FIG. 12]

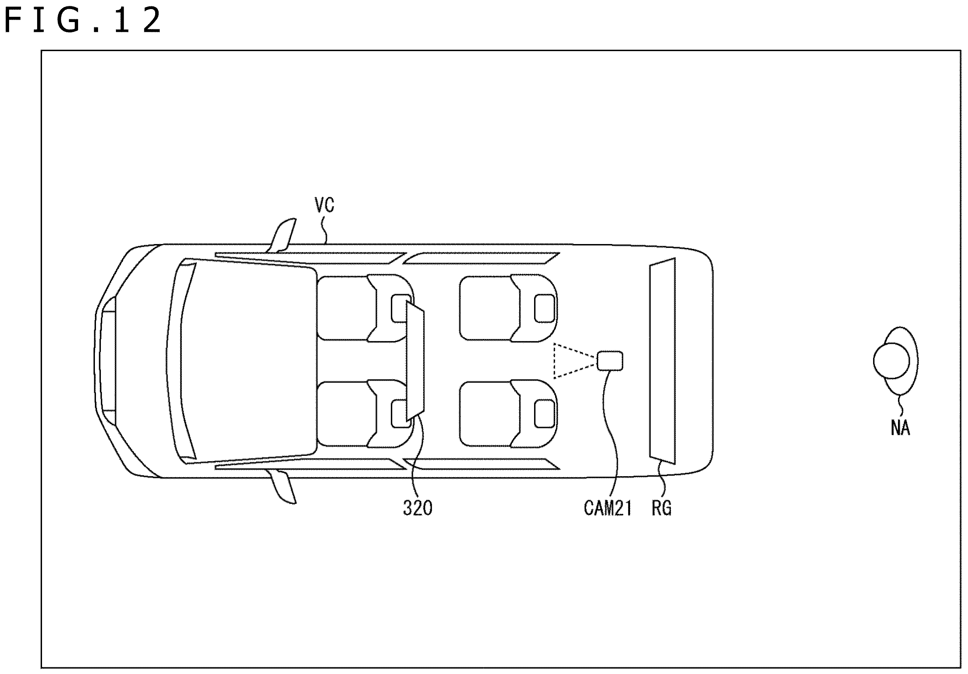

   FIG. 12 is a diagram depicting a second positioning example of the brightness detection section.
[FIG. 13]

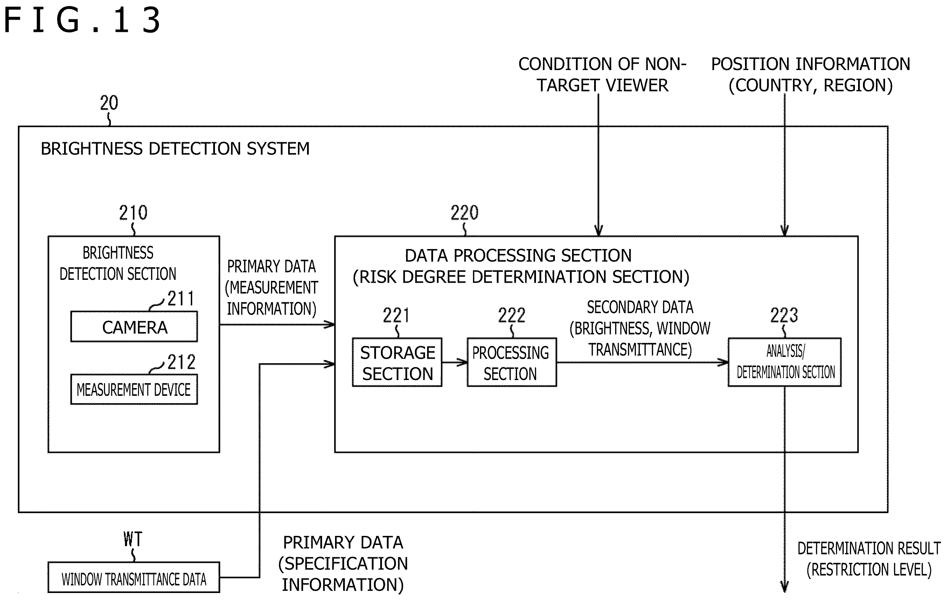

   FIG. 13 is a block diagram depicting another configuration example of the brightness detection system.
[FIG. 14]

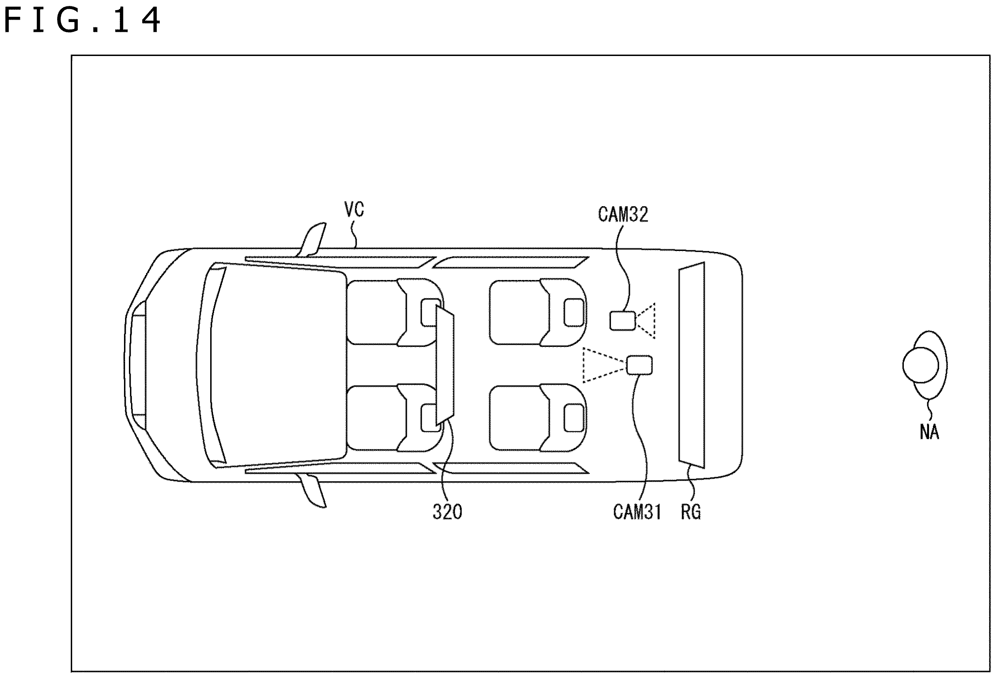

   FIG. 14 is a diagram depicting a third positioning example of the brightness detection section.
[FIG. 15]

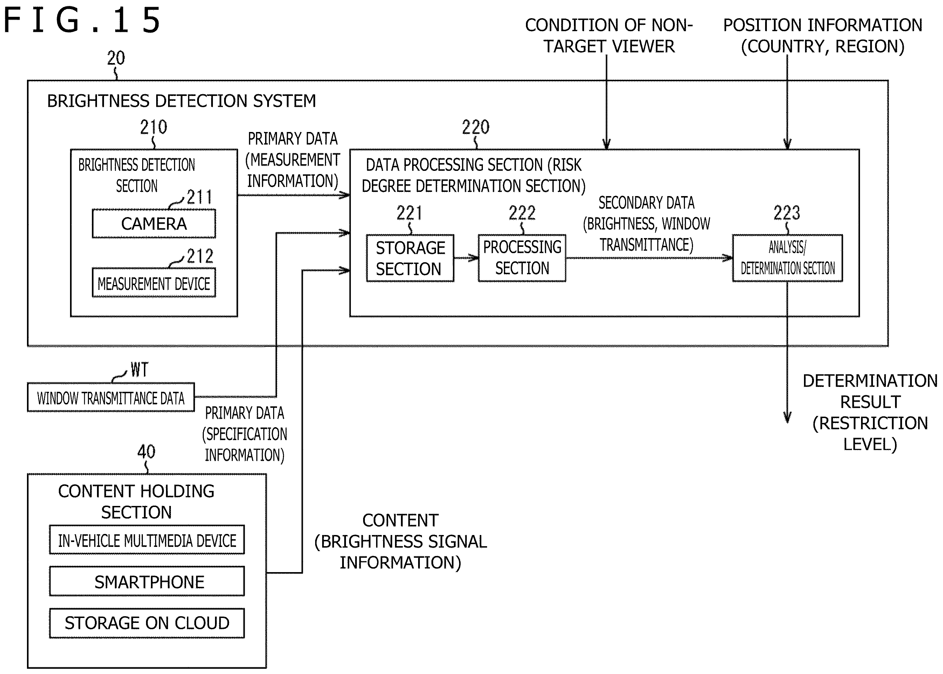

   FIG. 15 is a block diagram depicting still another configuration example of the brightness detection system.
[FIG. 16]

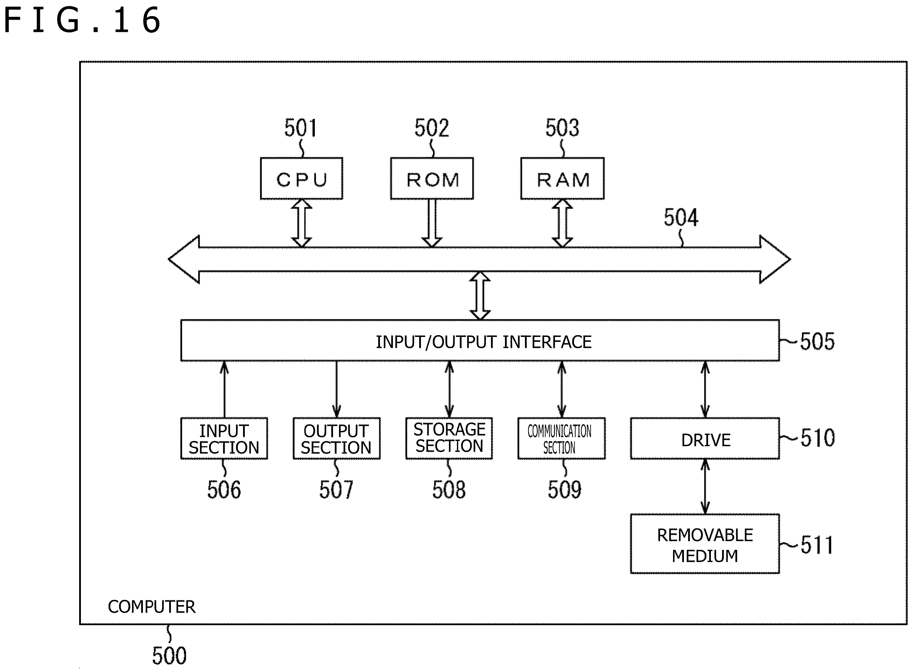

   FIG. 16 is a block diagram depicting a configuration example of a computer.

### [Description of Embodiments]

Hereinafter, embodiments for carrying out the present technology (hereinafter, referred to as "embodiments") will be explained. It is to be noted that the explanation will be given in the following order.
1. Overall Configuration and Operations of Information Display/Determination System
2. Details of Systems Constituting Information Display/Determination System
3. Operations of Systems Constituting Information Display/Determination System
4. Positioning Examples of Brightness Detection Section
5. Modifications
6. Configuration Example of Computer

### <1. Overall Configuration and Operations of Information Display/Determination System>

### (Configuration of Information Display/Determination System)

FIG. 1 is a block diagram depicting a configuration example of an information display/determination system 1 which is one example of an information processing system (information processing apparatus) that the present technology is applied to.

The information display/determination system 1 can be installed in a vehicle (automobile) as a mobile body. A display section (display) on which an occupant seated on, for example, a back seat can view a video is installed in the interior of the vehicle having the information display/determination system 1 installed therein. That is, the information display/determination system 1 can provide a video content viewing space to the occupant in the vehicle.

As depicted in FIG. 1, the information display/determination system 1 includes an outside-vehicle condition recognition system 10, a brightness detection system 20, a display system 30, and a content holding section 40.

The outside-vehicle condition recognition system 10 has a function of a condition determination section that determines the condition of the outside of a vehicle (subject vehicle) in which the information display/determination system 1 is installed. The outside-vehicle condition recognition system 10 determines the condition of the outside of the vehicle by using sensors that are disposed on parts of the subject vehicle or using communication with the outside of the subject vehicle, and outputs information indicating the condition of the outside of the subject vehicle to the brightness detection system 20.

The brightness detection system 20 has a function of a risk degree determination section that determines the degree of misrecognition risk of a video (hereinafter, also referred to as an in-vehicle video) being displayed on a display section disposed in the interior of the vehicle from the outside of the vehicle according to the information (the condition of the outside of the vehicle) obtained from the outside-vehicle condition recognition system 10 and brightness information regarding the video. The brightness information regarding the video is acquired by direct measurement of the brightness of the display section, or is acquired from content which is a video supplied from the content holding section 40. Information indicating the degree of misrecognition risk determined by the brightness detection system 20 is outputted to the display system 30.

The display system 30 has a function of a display control section that controls display of an in-vehicle video. Specifically, the display system 30 imposes a display restriction on content (a video) supplied from the content holding section 40, according to information (the degree of misrecognition risk) obtained from the brightness detection system 20. Display restrictions to be imposed on videos include a change of a displayed matter in a video, on-off switching of a video, and power control on a light source of the display section.

The content holding section 40 is formed as a recording device in which content to be used as an in-vehicle video is held (recorded). Content held in the content holding section 40 is read out by the brightness detection system 20 and the display system 30, if needed.

### (Operations of Information Display/Determination System)

Next, operations of the information display/determination system 1 will be explained with reference to the flowchart in FIG. 2.

In step S1, the outside-vehicle condition recognition system 10 determines the condition of the outside of a subject vehicle by executing a condition determination process based on outside-vehicle information regarding the outside of the subject vehicle.

In step S2, the brightness detection system 20 determines the degree of misrecognition risk of an in-vehicle video from the outside of the subject vehicle by executing a risk degree determination process according to the outside-vehicle condition determined by the outside-vehicle condition recognition system 10 and brightness information regarding the in-vehicle video.

In step S3, the display system 30 imposes a display restriction on the in-vehicle video by executing a display control process according to the degree of misrecognition risk of the in-vehicle video determined by the brightness detection system 20.

According to the abovementioned processes, even in a case where a video being displayed on the display section in the interior of the vehicle is viewable from the outside of the vehicle, a driver of a peripheral vehicle traveling in the rear of or alongside the subject vehicle can be prevented from mistakenly recognizing the video as a lamp device. Accordingly, a safe viewing space in the interior of the vehicle can be provided while safety in the outside of the vehicle is taken into consideration.

### <2. Details of Systems Constituting Information Display/Determination System>

Detailed configuration examples of the systems constituting the information display/determination system 1 will be explained below.

### (Configuration of Outside-vehicle Condition Recognition System)

FIG. 3 is a block diagram depicting a configuration example of the outside-vehicle condition recognition system 10.

The outside-vehicle condition recognition system 10 includes a sensing section 110 and a data processing section 120.

The sensing section 110 acquires outside-vehicle information regarding the outside of the subject vehicle, and supplies the outside-vehicle information as unprocessed primary data to the data processing section 120.

The sensing section 110 includes at least any one of a camera 111, a radar 112, a ToF (Time of Flight) sensor 113, a LiDAR (Light Detection And Ranging) 114, and an ultrasonic sensor 115 to sense the outside of the subject vehicle. Specifically, the sensing section 110 supplies, as the outside-vehicle information, sensing information that is obtained by sensing a rearward area of the subject vehicle, to the data processing section 120.

The data processing section 120 functions as a condition determination section that determines the condition of the outside of the subject vehicle according to secondary data that is generated by performing predetermined data processing on the primary data (the outside-vehicle information) obtained from the sensing section 110.

The data processing section 120 is implemented by, for example, a CPU (Central Processing Unit), a microcomputer, or an SoC (System on a chip) having a memory or the like mounted thereon. The data processing section 120 includes a storage section 121, a processing section 122, and an analysis/determination section 123.

In the storage section 121, outside-vehicle information obtained from the sensing section 110 is accumulated. The outside-vehicle information stored in the storage section 121 is sequentially read out by the processing section 122.

The processing section 122 sequentially reads out the outside-vehicle information stored in the storage section 121, and performs processing to convert the read data to secondary data that can be processed by the analysis/determination section 123. Specifically, the processing section 122 creates information indicating an image of the outside of the subject vehicle, the distance from the subject vehicle to a peripheral object, the absolute speeds of the subject vehicle and the peripheral object, or the relative speed between the subject vehicle and the peripheral object according to the outside-vehicle information, and supplies the created data as secondary data to the analysis/determination section 123.

It is to be noted that the outside-vehicle information is not limited to sensing information that is acquired by the sensing section 110. The processing section 122 may acquire, as the outside-vehicle information, traffic information regarding the periphery of the subject vehicle obtained by ITS (Intelligence Transmission System) communication or V2X (Vehicle to X) communication and/or vehicle information regarding another vehicle (for example, a peripheral vehicle traveling in the rear of or alongside of the subject vehicle) traveling at the periphery of the subject vehicle obtained by V2V (Vehicle to Vehicle) communication.

The analysis/determination section 123 determines the condition of the outside of the vehicle according to the secondary data (an image, a distance, a speed) obtained from the processing section 122.

Specifically, the analysis/determination section 123 recognizes a person (hereinafter, referred to as a non-target viewer) who is outside the subject vehicle and is not a target viewer of the in-vehicle video, according to the image obtained from the processing section 122. Examples of the non-target viewer include a pedestrian who is walking on the periphery of the vehicle and a driver of a peripheral vehicle traveling in the rear of or alongside the subject vehicle.

Further, the analysis/determination section 123 measures the distance to a non-target viewer according to the distance obtained from the processing section 122. Moreover, the analysis/determination section 123 calculates a relative speed with respect to the non-target viewer according to the speed obtained from the processing section 122. Then, the analysis/determination section 123 determines, as the condition of the non-target viewer, whether or not the non-target viewer is visually recognizing the in-vehicle video according to the recognition result, the distance, and the relative speed of the non-target viewer.

A determination result indicating the condition of the non-target viewer (whether or not the non-target viewer is visually recognizing the in-vehicle video) is outputted to the brightness detection system 20.

### (Configuration of Brightness Detection System)

FIG. 4 is a block diagram depicting a configuration example of the brightness detection system 20.

The brightness detection system 20 includes a brightness detection section 210 and a data processing section 220.

The brightness detection section 210 acquires measurement information by measuring the brightness of an in-vehicle video, and supplies the measurement information as unprocessed primary data to the data processing section 220.

The brightness detection section 210 includes at least any one of a camera 211 and a measurement device 212 to measure the brightness of an in-vehicle video. The measurement device 212 is formed of a device such as a brightness meter, an illuminometer, a photometer, a power meter, or a calorimeter, which is capable of measuring the brightness. For example, the brightness detection section 210 is disposed on an outer side (outer side of a rear part) of the subject vehicle, and supplies, as brightness information, measurement information that is obtained by measuring the brightness of the in-vehicle video via the rear glass of the subject vehicle to the data processing section 220.

The data processing section 220 functions as a risk degree determination section that determines the degree of misrecognition risk of an in-vehicle video from the outside of the vehicle according to secondary data which is generated as a result of performing prescribed data processing on primary data (measurement information) supplied from the brightness detection section 210.

Like the data processing section 120 (FIG. 3), the data processing section 220 is also implemented by, for example, a CPU, a microcomputer, or an SoC having a memory or the like mounted thereon. The data processing section 220 also includes a storage section 221, a processing section 222, and an analysis/determination section 223.

In the storage section 221, measurement information supplied from the brightness detection section 210 is stored. The measurement information stored in the storage section 221 is sequentially read out by the processing section 222.

The processing section 222 sequentially reads out measurement information stored in the storage section 221, and performs processing to convert the measurement information to secondary data that can be processed by the analysis/determination section 223. Specifically, the processing section 222 creates information indicating the brightness of an in-vehicle video according to the measurement information, and supplies the created information as secondary data to the analysis/determination section 223.

The analysis/determination section 223 determines the degree of misrecognition risk of the in-vehicle video from the outside of the vehicle according to the secondary data (brightness) supplied from the processing section 222.

Specifically, the analysis/determination section 223 determines the degree of misrecognition risk of the in-vehicle video for the non-target viewer according to the determination result (condition of the non-target viewer) obtained from the outside-vehicle condition recognition system 10 and the brightness obtained from the processing section 222.

More specifically, the analysis/determination section 223 determines, as the degree of misrecognition risk, a possibility that the in-vehicle video will mistakenly be recognized as a lamp device (e.g., a blinker, a side light, a tail lamp, a back lamp, or a stop lamp) of the vehicle.

For example, the analysis/determination section 223 determines whether or not the color value R (Red) (0 ≤ R ≤ 255) and the brightness value Hist (0 ≤ Hist ≤ 255) of each pixel of the in-vehicle video satisfy criteria of R < x and Hist < y, respectively. The values of x and y are determined according to, for example, the regulation on lamps (300 cd or lower in terms of luminous intensity, for example) which is specified in the Announcement that prescribes details of safety regulations for road vehicles under the Road Transport Vehicle Act in Japan. The values of x and y are variably determined according to numerical values specified by regulations of the local laws in each region or each country.

In this case, by determining the values of x and y according to position information indicating a country or a region where the subject vehicle is traveling, the analysis/determination section 223 determines the possibility that the in-vehicle video will mistakenly be recognized as a lamp device of the vehicle. The position information may be acquired by a GPS (Global Positioning System) or a VPS (Visual Positioning System/Service) which measures a position on the basis of images, or may be identification information or position information previously defined for a roadside device of an ETC (Electronic Toll Collection System), for example. Alternatively, the position information may be rough position information indicating a country or a region based on information that has been registered in advance in a vehicle system that includes an ECU (Electronic Control Unit) of the vehicle.

It is to be noted that, in a case in which the numerical value specified in each country or each region is updated by an amendment of the law, the values of x and y are also updated to satisfy criteria corresponding to the updated numerical vale. Updating of the values of x and y can be implemented by, for example, updating software that is to be operated by a device mounted on the subject vehicle, directly or via a cloud.

Further, the analysis/determination section 223 may determine, as the degree of misrecognition risk, a possibility that the in-vehicle video will mistakenly be recognized as a road sign or a traffic signal. In this case, the analysis/determination section 223 determines whether or not a road sign/traffic signal or an object similar thereto is included in the in-vehicle video by performing object recognition through machine learning.

Then, according to the determined degree of misrecognition risk, the analysis/determination section 223 determines a restriction level, which represents a display restriction range of an in-vehicle video being displayed by the display system 30. The determination result indicating the restriction level is outputted to the display system 30.

### (Configuration of Display System)

FIG. 5 is a block diagram depicting a configuration example of the display system 30.

The display system 30 includes a data processing section 310 and a display section 320.

The data processing section 310 functions as a display control section that performs display control of an in-vehicle video according to content (video signal) supplied from the content holding section 40, and imposes a display restriction on the video according to a restriction level corresponding to the degree of misrecognition risk determined by the brightness detection system 20.

The data processing section 310 is implemented by, for example, a CPU, a microcomputer, or an SoC having a memory or the like mounted thereon. The data processing section 310 includes a storage section 311, a processing section 312, a displayed-matter control section 313, and a brightness control section 314.

In the storage section 311, a video signal supplied from the content holding section 40 is stored. Video signals accumulated in the storage section 311 are sequentially read out by the processing section 312.

Here, the content holding section 40 can include not only an onboard multimedia device, a smartphone possessed by an occupant, and a storage in a cloud that is communicable with the subject vehicle, but also a reproduction device capable of reproducing video content, or the like.

The processing section 312 sequentially reads out the video signals stored in the storage section 311, and performs processing to convert the signals to secondary data that can be processed by the displayed-matter control section 313 and the brightness control section 314. The processed video signals are supplied, as secondary data, to the displayed-matter control section 313 and the brightness control section 314.

The displayed-matter control section 313 performs, on the secondary data (video signals) supplied from the processing section 312, processing for changing a displayed matter in the vehicle video, according to the restriction level obtained from the brightness detection system 20. The term "displayed matter" covers the brightness, the color, the shape, etc., of an object included in the in-vehicle video. That is, the brightness control section 314 determines an area in the in-vehicle video where the brightness, the color, the shape, or the like is to be changed, and supplies a video signal obtained by changing the brightness, the color, the shape, or the like in the determined area, to the display section 320.

Further, the displayed-matter control section 313 may switch the on/off of display of the in-vehicle video on the display section 320 by controlling supply of secondary data (video signal) supplied from the processing section 312 to the display section 320, according to the restriction level obtained from the brightness detection system 20.

The brightness control section 314 generates a control signal for controlling power of a light source of the display section 320, according to the restriction level supplied from the brightness detection system 20 and the brightness or the color of an object included in the in-vehicle video being displayed on the display section 320, and outputs the control signal to the display section 320. Specifically, the brightness control section 314 determines, in the in-vehicle video, a pixel position (address) to be subjected to brightness control, and then, generates a control signal for controlling power of a light source corresponding to the determined pixel position. Alternatively, the brightness control section 314 may generate a control signal for controlling power of a light source part (a light source of what is generally called a back light, a projector, or the like) that collectively controls the brightness of all pixels in the entire screen.

It is to be noted that any display such as a direct-vision display which is, for example, a liquid crystal display, an OLED (Organic Light Emitting Diode) display, or an LED display, a projector, or a space display capable of providing stereoscopic visions or three-dimensional representation can be adopted as the display section 320 as long as videos and information can be indicated on the display.

In addition, when the brightness, the color, the tone, or the shape of an object included in an in-vehicle video being displayed on the display section 320 is changed or when display of the in-vehicle video on the display section 320 is turned off, a notification using a message, a sound, or an icon may be given to an occupant viewing the in-vehicle video in advance.

Here, objects for which displayed matters are changed by the displayed-matter control section 313 or brightness is controlled by the brightness control section 314 are objects that are highly likely to be misrecognized by non-target viewers.

FIG. 6 depicts examples of objects that are highly likely to be misrecognized.

A in FIG. 6 indicates, as objects that are highly likely to be misrecognized, a pair of objects OBJ1L and OBJ1R which are tail lamps of the vehicle themselves or are similar to the tail lamps. B in FIG. 6 indicates, as an object that is highly likely to be misrecognized, an object OBJ2 which is a road sign indicative of "No entry" itself or is similar thereto. C in FIG. 6 indicates, as an object that is highly likely to be misrecognized, an object OBJ3 which is a road sign indicative of "Go only in direction of Arrow" or is similar thereto. D in FIG. 6 indicates, as an object that is highly likely to be misrecognized, an object OBJ4 which is a traffic signal itself or is similar thereto.

It is to be noted that objects that are highly likely to be misrecognized are not limited to those depicted in FIG. 6. Such objects may be any other road signs, traffic signals of any other types, objects similar thereto, or objects of characters, logos, advertisements, etc.

In a case where an in-vehicle video being displayed on the display section 320 includes the objects OBJ1L and OBJ1R, the brightness of the area of the objects OBJ1L and OBJ1R is controlled by the brightness control section 314. Accordingly, the objects OBJ1L and OBJ1R can be prevented from being mistakenly recognized as a vehicle tail lamp.

In a case where an in-vehicle video being displayed on the display section 320 includes the object OBJ2, the color of the object OBJ2 is changed (object OBJ2-1) by the displayed-matter control section 313, as depicted in A in FIG. 7. Likewise, the tone of the object OBJ2 may be changed (object OBJ2-2), and the shape of the object OBJ2 may be changed (object OBJ2-3). Accordingly, the object OBJ2 can be prevented from being mistakenly recognized as a road sign indicative of "No entry."

It is to be noted that, instead of the color or the tone of the object itself, such as the object OBJ2-1 and the object OBJ2-2, the color or the tone of an area excluding the object OBJ2 in the in-vehicle video being displayed on the display section 320 may be changed.

In a case where an in-vehicle video being displayed on the display section 320 includes the object OBJ3, the shape (design) of an arrow included in the object OBJ3 is changed (object OBJ3-1) by the displayed-matter control section 313, as depicted in B in FIG. 7. It is sufficient that the shape (design) is changed so as not to change the meaning of the object. Accordingly, the object OBJ3 can be prevented from being mistakenly recognized as a road sign indicative of "Go only in direction of Arrow."

In a case where an in-vehicle video being displayed on the display section 320 includes the object OBJ4, the design of the object OBJ4 is changed by being horizontally inversed by the displayed-matter control section 313 (object OBJ4-1), as depicted in C in FIG. 7.

In a case where the driving condition of a peripheral vehicle is an autonomous driving condition, the objects described above are possibly mistakenly recognized by a front camera or a side camera provided on the peripheral vehicle or by a monitoring camera that is present on a traffic system capable of performing ITS or V2X.

Therefore, for example, display of the object OBJ4 is changed to the object OBJ4-1 which is not present in a country or a region where the subject vehicle is traveling, according to position information indicating the country or the region. Accordingly, misrecognition at a camera related to automated driving can be prevented.

In the manner described above, the data processing section 310 changes a displayed matter in an in-vehicle video being displayed on the display section 320, or controls power of a light source of the display section 320, so that a possibility that the in-vehicle video will mistakenly be recognized as a vehicle lamp device, a road sign, or a traffic signal, can be reduced.

### <3. Operations of Systems Constituting Information Display/Determination System>

Operations of the systems constituting the information display/determination system 1 described above will be explained below.

### (Operations of Outside-vehicle Condition Recognition System)

First, operations of the outside-vehicle condition recognition system 10 in FIG. 3 will be explained with reference to a flowchart in FIG. 8.

In step S11, the data processing section 120 acquires outside-vehicle information from the sensing section 110.

In step S12, the data processing section 120 recognizes a non-target viewer for an in-vehicle video according to the outside-vehicle information.

In step S13, the data processing section 120 measures the distance to the non-target viewer according to the non-target viewer recognition result and the outside-vehicle information.

In step S14, the data processing section 120 calculates a relative speed of the non-target viewer according to the non-target viewer recognition result and the outside-vehicle information.

In step S15, the data processing section 120 determines the condition of the non-target viewer, that is, determines whether or not the non-target viewer is visually recognizing the in-vehicle video, according to the non-target viewer recognition result, the distance to the non-target viewer, and the relative speed of the non-target viewer. The obtained determination result (the condition of the non-target viewer) is outputted to the brightness detection system 20.

### (Operations of Brightness Detection System)

Next, operations of the brightness detection system 20 in FIG. 4 will be explained with reference to the flowchart in FIG. 9.

In step S21, the data processing section 220 acquires brightness information from the brightness detection section 210.

In step S22, the data processing section 220 acquires position information indicating a country or a region where the subject vehicle is traveling.

In step S23, the data processing section 220 determines the degree of misrecognition risk of the in-vehicle video according to the determination result (the condition of the non-target viewer) obtained from the outside-vehicle condition recognition system 10, the brightness information, and further, the position information.

In step S24, the data processing section 220 determines a restriction level according to the degree of misrecognition risk. The obtained restriction level is outputted to the display system 30.

### (Operations of Display System)

Further, operations of the display system 30 in FIG. 5 will be explained with reference to the flowchart in FIG. 10.

In step S31, the data processing section 310 changes a displayed matter in the in-vehicle video according to the restriction level supplied from the brightness detection system 20.

In step S32, the data processing section 310 determines a power amount of a light source of the display section 320 according to the restriction level supplied from the brightness detection system 20.

In step S33, the data processing section 310 controls the display section 320 to have the in-vehicle video displayed according to the determined matter and the determined power amount of the light source.

As a result of the above steps, a driver of a peripheral vehicle traveling in the rear of or alongside the subject vehicle, for example, can be prevented from mistakenly recognizing a video being displayed on the display section 320 in the interior of the vehicle, as a lamp device or the like. Therefore, a safe viewing space in the interior of the vehicle can be provided while safety in the outside of the vehicle is taken into consideration.

### <4. Positioning Examples of Brightness Detection Section>

Positioning examples of the brightness detection section 210 that acquires brightness information will be explained below.

### (First Positioning Example)

In the explanation described above, the brightness detection section 210 is disposed on an outer side (outer side of a rear part) of the subject vehicle, and acquires, as brightness information, measurement information indicating the brightness of the in-vehicle video measured via the rear glass of the subject vehicle.

Specifically, as depicted in FIG. 11, a camera CAM 11 serving as the brightness detection section 210 is disposed on the outer side of a rear part of the subject vehicle VC, and the camera CAM 11 photographs the display section 320 which is disposed in the interior of the subject vehicle VC via a rear glass RG of the vehicle VC. Accordingly, the camera CAM 11 can measure the brightness of the in-vehicle video being displayed on the display section 320 in view of the transmittance of the rear glass RG.

It is to be noted that the camera CAM 11 is not limited to an exterior camera that is disposed on the outer side of the subject vehicle VC, and the camera CAM 11 may include a front camera or a side camera provided on a peripheral vehicle of the subject vehicle VC or by a monitoring camera that is present on a traffic system capable of performing ITS or V2X.

The transmittance of the rear glass RG is assumed to vary due to an electric shade, blind, or the like. With regard to this, in the example of FIG. 11, the camera CAM 11 serving as the brightness detection section 210 can measure the brightness of the in-vehicle video in view of the transmittance of the rear glass RG. Accordingly, the brightness of the in-vehicle video being visually recognized by a non-target viewer NA who is in a rearward direction of the vehicle VC can properly be obtained. As a result, the brightness of the in-vehicle video being displayed on the display section 320 can be controlled such that the in-vehicle video that includes, for example, a red color, and that is being visually recognized by the non-target viewer NA can be prevented from mistakenly being recognized as a rear lamp device on the vehicle.

### (Second Positioning Example)

The brightness detection section 210 may be disposed in the interior of the vehicle, and measurement information indicating the brightness of the in-vehicle video directly measured by the brightness detection section 210 and preliminarily prepared transmittance of a rear glass of the subject vehicle may be acquired as brightness information.

Specifically, as depicted in FIG. 12, a camera CAM 21 serving as the brightness detection section 210 is disposed in a rear portion of the interior of the subject vehicle VC, and the camera CAM 21 photographs the display section 320 that is disposed in the interior of the subject vehicle VC. Accordingly, the camera CAM 21 can directly measure the brightness of the in-vehicle video being displayed on the display section 320.

It is to be noted that the camera CAM 21 may include an in-vehicle camera having a system function, such as a DMS (Driver Monitoring System) or a PMS (Passenger Monitoring System), for sensing people or animals in an interior of a vehicle in order to sense the condition of an occupant in the subject vehicle VC.

The transmittance of the rear glass RG is assumed to vary due to an electric shade or blind. With regard to this, in the example of FIG. 12, the camera CAM 21 serving as the brightness detection section 210 cannot measure the varying transmittance of the rear glass RG. Therefore, a prepared transmittance of the rear glass RG is obtained.

For example, in the brightness detection system 20, the data processing section 220 acquires, as primary data, not only measurement information supplied from the brightness detection section 210 but also specification information prepared as window transmittance data WT, as depicted in FIG. 13. The window transmittance data WT may include the transmittance of the rear glass RG as the specification information regarding the rear glass RG, or may include information regarding the material or the thickness of the rear glass RG from which the transmittance can be calculated. Alternatively, the window transmittance data WT may include information indicating a relation of the transmittance with respect to an electrically varying parameter such as a current, a voltage, a driving frequency, or a duty ratio.

That is, besides the directly measured brightness of the in-vehicle video, a transmittance acquired as specification information regarding the rear glass RG is taken into consideration, so that the brightness of the in-vehicle video being visually recognized by the non-target viewer Na who is in a rearward direction of the subject vehicle VC can properly be obtained. As a result, the brightness of the in-vehicle video being displayed on the display section 320 can be controlled such that the in-vehicle video that includes, for example, a red color, and that is being visually recognized by the non-target viewer NA can be prevented from mistakenly being recognized as a rear lamp device on the vehicle.

### (Third Positioning Example)

The brightness detection section 210 may be disposed in the interior of the subject vehicle, and measurement information indicating the brightness of an in-vehicle video directly measured by the brightness detection section 210 and the transmittance of a rear glass of the subject vehicle directly measured by the brightness detection section 210 may be acquired as brightness information.

Specifically, as depicted in FIG. 14, a camera CAM 31 serving as the brightness detection section 210 is disposed in a rear portion of the interior of the subject vehicle VC, and the camera CAM 31 photographs the display section 320 which is disposed in the interior of the subject vehicle VC. Accordingly, the camera CAM 31 can directly measure the brightness of the in-vehicle video being displayed on the display section 320. Furthermore, a camera CAM 32 serving as the brightness detection section 210 is disposed in a rear portion of the interior of the subject vehicle VC, and the camera CAM 32 photographs the rear glass RG of the subject vehicle VC. Accordingly, the camera CAM 32 can directly measure the transmittance of the rear glass RG. For example, the camera CAM 32 can measure the transmittance of the rear glass RG according to a reference such as a sticker on the outer side of the rear glass RG, with which an absolute value of the transmittance or a change rate of the transmittance can be obtained.

It is to be noted that the cameras CAM 31 and CAM 32 may include in-vehicle cameras having a recognition system function such as a DMS or a PMS in order to sense the condition of an occupant in the subject vehicle VC.

The transmittance of the rear glass RG is assumed to vary due to an electric shade or blind. With regard to this, in the example of FIG. 14, the camera CAM 31 serving as the brightness detection section 210 can directly measure the brightness of the in-vehicle video, and further, the camera CAM 32 serving as the brightness detection section 210 can directly measure the transmittance of the rear glass RG. Accordingly, the brightness of the in-vehicle video being visually recognized by a non-target viewer NA who is in a rearward direction of the subject vehicle VC can properly be obtained. As a result of this, the brightness of the in-vehicle video being displayed on the display section 320 can be controlled such that the in-vehicle video that includes, for example, a red color, and is being visually recognized by the non-target viewer NA, is prevented from mistakenly being recognized as a rear lamp device on the vehicle.

### <5. Modifications>

Modifications of the embodiments described above will be explained below.

### (Acquiring Brightness Information According to Content)

In the brightness detection system 20, the data processing section 220 (risk degree determination section) may acquire brightness information according to content (video signal) supplied from the content holding section 40. Needless to say, hybrid brightness information which is a combination of this brightness information and brightness information obtained by the brightness detection section 210 which is, for example, a camera, can be used.

For example, as depicted in FIG. 15, the data processing section 220 is configured to estimate the brightness of the in-vehicle video according to brightness signal information included in the content (video signal) supplied from the content holding section 40. In this case, the data processing section 220 may obtain the brightness of the in-vehicle video that is being visually recognized by the non-target viewer, according to the estimated brightness of the in-vehicle video and the transmittance acquired as rear glass specification information included in the window transmittance data WT. Alternatively, the data processing section 220 may obtain the brightness of the in-vehicle video that is being visually recognized by the non-target viewer, according to the estimated brightness of the in-vehicle video and the transmittance of the rear glass directly measured by an in-vehicle camera.

### (Display Restriction Based on Vehicle Information Regarding Peripheral Vehicle)

In the display system 30, the data processing section 310 (display control section) may impose a display restriction on the in-vehicle video according to a driving condition of the peripheral vehicle determined from vehicle information regarding the peripheral vehicle.

Specifically, in a case where the driving condition of the peripheral vehicle is determined as a manual driving condition from vehicle information acquired by V2V communication, setting to impose a display restriction on the in-vehicle video is performed. In contrast, in a case where the driving condition of the peripheral vehicle is determined as an automated driving condition, setting to impose no display restriction on the in-vehicle video is performed.

It is to be noted that, under circumstances where automated driving of the peripheral vehicle can be safely performed, a display restriction is not necessarily imposed on the in-vehicle video, whereas, under circumstances where safety of automated driving of the peripheral vehicle is not guaranteed according to automated driving modes, a display restriction may be imposed on the in-vehicle video.

### <6. Configuration Example of Computer>

The series of processes described above can also be executed by hardware or can also be executed by software. In a case where the series of processes is executed by software, a program constituting the software is installed from a program recording medium into a computer incorporated in dedicated hardware or a general-purpose personal computer.

FIG. 16 is a block diagram depicting a hardware configuration example of a computer that executes the series of processes described above according to a program.

The information display/determination system 1 described above is implemented by a computer 500 that has a configuration depicted in FIG. 16.

A CPU 501, a ROM 502, and a RAM 503 are mutually connected via a bus 504.

Further, an input/output interface 505 is connected to the bus 504. An input section 506 that includes a keyboard or a mouse, for example, and an output section 507 that includes a display or a loudspeaker, for example, are connected to the input/output interface 505. In addition, a storage section 508 that includes a hard disk or a nonvolatile memory, for example, a communication section 509 that includes a network interface, for example, and a drive 510 that drives a removable medium 511, are connected to the input/output interface 505.

In the computer 500 having the configuration described above, the CPU 501 loads a program stored in the storage section 508, for example, into the RAM 503 via the input/output interface 505 and the bus 504, and executes the program. Accordingly, the series of processes described above is executed.

A program to be executed by the CPU 501 is recorded in the removable medium 511, or is provided through a wired or wireless transmission medium such as a local area network, the internet, or digital satellite broadcasting, and then, is installed into the storage section 508.

It is to be noted that a program to be executed by the CPU 501 may be a program for executing the processes in the time-series order explained herein, may be a program for executing the processes parallelly, or may be a program for executing the processes at a necessary timing such as a timing when a call is made.

In the present description, the term "system" means a set of multiple constituent components (devices, modules (components), etc.), and whether or not all the constituent components are included in the same casing does not matter. Therefore, a set of multiple devices that are housed in different casings and are connected over a network is a system, and further, a single device having multiple modules housed in a single casing is also a system.

The embodiments of the present technology are not limited to the embodiment described above, and various changes can be made within the scope of the gist of the present technology.

In addition, the effects described in the present description are just examples, and thus, are not limited to a particular one. Thus, any other effect may be provided.

Moreover, the present technology can also take the following configurations.
(1) An information processing apparatus including:
   a condition determination section that determines a condition of an outside of a subject vehicle according to outside-vehicle information regarding the outside of the subject vehicle;
   a risk degree determination section that determines a degree of misrecognition risk of a video being displayed on a display section disposed in an interior of the subject vehicle from the outside of the subject vehicle according to the determined condition of the outside of the subject vehicle and brightness information regarding the video; and
   a display control section that imposes a display restriction on the video according to the degree of misrecognition risk.
(2) The information processing apparatus according to (1), in which
   the condition determination section determines a condition of a non-target viewer for the video who is outside the subject vehicle, and
   the risk degree determination section determines the degree of misrecognition risk for the non-target viewer.
(3) The information processing apparatus according to (2), in which
   the condition determination section determines, as the condition of the non-target viewer, whether or not the non-target viewer is visually recognizing the video.
(4) The information processing apparatus according to (3), in which
   the non-target viewers include a pedestrian, and a driver of a peripheral vehicle traveling in a rear of or alongside the subject vehicle.
(5) The information processing apparatus according to (4), in which
   the outside-vehicle information includes sensing information obtained by sensing a rearward area of the subject vehicle.
(6) The information processing apparatus according to (4), in which
   the outside-vehicle information includes any one of traffic information regarding a periphery of the subject vehicle obtained by ITS communication or V2V communication and vehicle information regarding the peripheral vehicle obtained by V2V communication.
(7) The information processing apparatus according to (6), in which,
   in a case where the peripheral vehicle is determined to be automatedly traveling according to the vehicle information, the display control section refrains from imposing the display restriction on the video.
(8) The information processing apparatus according to any one of (1) to (7), in which
   the risk degree determination section determines, as the degree of misrecognition risk, a possibility that the video will mistakenly be recognized as a lamp device of the subject vehicle.
(9) The information processing apparatus according to any one of (1) to (7), in which
   the risk degree determination section determines, as the degree of misrecognition risk, a possibility that the video will mistakenly be recognized as a road sign or a traffic signal.
(10) The information processing apparatus according to any one of (1) to (9), in which
   the display control section changes a displayed matter in the video according to a restriction level corresponding to the degree of misrecognition risk.
(11) The information processing apparatus according to (10), in which
   the displayed matter includes at least any one of brightness, a color, a tone, and a shape of an object included in the video.
(12) The information processing apparatus according to (11), in which,
   in a case where the object that is a road sign or a traffic signal itself or is similar to a road sign or a traffic signal is included in the video, the display control section changes the displayed matter.
(13) The information processing apparatus according to any one of (1) to (9), in which
   the display control section switches an on/off of the video on the display section according to a restriction level corresponding to the degree of misrecognition risk.
(14) The information processing apparatus according to any one of (1) to (13), in which
   the display control section controls power of a light source of the display section according to a restriction level corresponding to the degree of misrecognition risk.
(15) The information processing apparatus according to any one of (1) to (14), in which
   the brightness information is acquired as measurement information which is obtained by measurement of brightness of the video via a rear glass of the subject vehicle through a brightness detection section disposed in the outside of the subject vehicle.
(16) The information processing apparatus according to any one of (1) to (14), in which
   the brightness information is acquired as measurement information which is obtained by measurement of brightness of the video through a brightness detection section disposed in the interior of the subject vehicle and as a prepared transmittance of a rear glass of the subject vehicle.
(17) The information processing apparatus according to any one of (1) to (14), in which
   the brightness information is acquired as first measurement information obtained by measurement of brightness of the video through a first brightness detection section disposed in the interior of the subject vehicle and second measurement information obtained by measurement of a rear glass of the subject vehicle through a second brightness detection section disposed in the interior of the subject vehicle.
(18) The information processing apparatus according to any one of (1) to (14), in which
   the brightness information is acquired as a brightness signal that is included in a video signal supplied to the display section.
(19) An information processing method including:
   by an information processing apparatus,
   determining a condition of an outside of a subject vehicle according to outside-vehicle information regarding the outside of the subject vehicle;
   determining a degree of misrecognition risk of a video being displayed on a display section disposed in an interior of the subject vehicle from the outside of the subject vehicle according to the determined condition of the outside of the subject vehicle and brightness information regarding the video; and
   imposing a display restriction on the video according to the degree of misrecognition risk.
(20) An information processing system including:
   a display section that is disposed in an interior of a subject vehicle;
   a condition determination section that determines a condition of an outside of the subject vehicle according to outside-vehicle information regarding the outside of the subject vehicle;
   a risk degree determination section that determines a degree of misrecognition risk of a video being displayed on the display section from the outside of the subject vehicle according to the determined condition of the outside of the subject vehicle and brightness information regarding the video; and
   a display control section that imposes a display restriction on the video according to the degree of misrecognition risk.
(21) A program for causing a computer to implement processes of:
   determining a condition of an outside of a subject vehicle according to outside-vehicle information regarding the outside of the subject vehicle;
   determining a degree of misrecognition risk of a video being displayed on a display section disposed in an interior of the subject vehicle from the outside of the subject vehicle according to the determined condition of the outside of the subject vehicle and brightness information regarding the video; and
   imposing a display restriction on the video according to the degree of misrecognition risk.

### [Reference Signs List]

1: Information display/determination system
10: Outside-vehicle condition recognition system
20: Brightness detection system
30: Display system
40: Content holding section
110: Sensing section
120: Data processing section
210: Brightness detection section
220: Data processing section
310: Data processing section
320: Display section

## Claims

1. An information processing apparatus comprising:
a condition determination section that determines a condition of an outside of a subject vehicle according to outside-vehicle information regarding the outside of the subject vehicle;
a risk degree determination section that determines a degree of misrecognition risk of a video being displayed on a display section disposed in an interior of the subject vehicle from the outside of the subject vehicle according to the determined condition of the outside of the subject vehicle and brightness information regarding the video; and
a display control section that imposes a display restriction on the video according to the degree of misrecognition risk.

2. The information processing apparatus according to claim 1, wherein
the condition determination section determines a condition of a non-target viewer for the video who is outside the subject vehicle, and
the risk degree determination section determines the degree of misrecognition risk for the non-target viewer.

3. The information processing apparatus according to claim 2, wherein
the condition determination section determines, as the condition of the non-target viewer, whether or not the non-target viewer is visually recognizing the video.

4. The information processing apparatus according to claim 3, wherein
the non-target viewers include a pedestrian, and a driver of a peripheral vehicle traveling in a rear of or alongside the subject vehicle.

5. The information processing apparatus according to claim 4, wherein
the outside-vehicle information includes sensing information obtained by sensing a rearward area of the subject vehicle.

6. The information processing apparatus according to claim 4, wherein
the outside-vehicle information includes any one of traffic information regarding a periphery of the subject vehicle obtained by ITS communication or V2V communication and vehicle information regarding the peripheral vehicle obtained by V2V communication.

7. The information processing apparatus according to claim 6, wherein,
in a case where the peripheral vehicle is determined to be automatedly traveling according to the vehicle information, the display control section refrains from imposing the display restriction on the video.

8. The information processing apparatus according to claim **1,** wherein
the risk degree determination section determines, as the degree of misrecognition risk, a possibility that the video will mistakenly be recognized as a lamp device of the subject vehicle.

9. The information processing apparatus according to claim **1,** wherein
the risk degree determination section determines, as the degree of misrecognition risk, a possibility that the video will mistakenly be recognized as a road sign or a traffic signal.

10. The information processing apparatus according to claim 1, wherein
the display control section changes a displayed matter in the video according to a restriction level corresponding to the degree of misrecognition risk.

11. The information processing apparatus according to claim 10, wherein
the displayed matter includes at least any one of brightness, a color, a tone, and a shape of an object included in the video.

12. The information processing apparatus according to claim 11, wherein
in a case where the object that is a road sign or a traffic signal itself or is similar to a road sign or a traffic signal is included in the video, the display control section changes the displayed matter.

13. The information processing apparatus according to claim 1, wherein
the display control section switches an on/off of the video on the display section according to a restriction level corresponding to the degree of misrecognition risk.

14. The information processing apparatus according to claim 1, wherein
the display control section controls power of a light source of the display section according to a restriction level corresponding to the degree of misrecognition risk.

15. The information processing apparatus according to claim 1, wherein
the brightness information is acquired as measurement information which is obtained by measurement of brightness of the video via a rear glass of the subject vehicle through a brightness detection section disposed in the outside of the subject vehicle.

16. The information processing apparatus according to claim 1, wherein
the brightness information is acquired as measurement information which is obtained by measurement of brightness of the video through a brightness detection section disposed in the interior of the subject vehicle and as a prepared transmittance of a rear glass of the subject vehicle.

17. The information processing apparatus according to claim 1, wherein
the brightness information is acquired as first measurement information obtained by measurement of brightness of the video through a first brightness detection section disposed in the interior of the subject vehicle and second measurement information obtained by measurement of a rear glass of the subject vehicle through a second brightness detection section disposed in the interior of the subject vehicle.

18. The information processing apparatus according to claim 1, wherein
the brightness information is acquired as a brightness signal that is included in a video signal supplied to the display section.

19. An information processing method comprising:
by an information processing apparatus,
determining a condition of an outside of a subject vehicle according to outside-vehicle information regarding the outside of the subject vehicle;
determining a degree of misrecognition risk of a video being displayed on a display section disposed in an interior of the subject vehicle from the outside of the subject vehicle according to the determined condition of the outside of the subject vehicle and brightness information regarding the video; and
imposing a display restriction on the video according to the degree of misrecognition risk.

20. An information processing system comprising:
a display section that is disposed in an interior of a subject vehicle;
a condition determination section that determines a condition of an outside of the subject vehicle according to outside-vehicle information regarding the outside of the subject vehicle;
a risk degree determination section that determines a degree of misrecognition risk of a video being displayed on the display section from the outside of the subject vehicle according to the determined condition of the outside of the subject vehicle and brightness information regarding the video; and
a display control section that imposes a display restriction on the video according to the degree of misrecognition risk.
